# EUROPÄISCHE PATENTANMELDUNG

(11) **EP 0 535 426 A1**
(43) Veröffentlichungstag der Anmeldung: **07.04.1993**
(21) Anmeldenummer: 92115632.9
(22) Anmeldetag: 12.09.1992
(51) Int. Cl.: B60R 7/02

(54) **Vorrichtung zum Unterteilen eines Kraftfahrzeug-Kofferraums**

(30) Priorität: 04.10.1991 DE 4132954
(71) Anmelder: Sterzel, Helmut Walter, D-71679 Asperg (DE); Schaffert, Walter, D-71679 Asperg (DE)
(72) Erfinder: Sterzel, Helmut Walter, D-71679 Asperg (DE); Schaffert, Walter, D-71679 Asperg (DE)
(74) Vertreter: Wolf, Eckhard, Dr.-Ing.

(57) **Zusammenfassung**

Die Erfindung bezieht sich auf einen Einsatz für einen Kraftfahrzeug-Kofferraum, der diesen in verschiedene Gebrauchsräume unterteilt. Der Einsatz weist einen auf dem Kofferraumboden (8) auflegbaren Fußrahmen (12) auf, dessen Rahmenschenkel (10) als Teleskoprohre ausgebildet sind. An dem Fußrahmen stehen mindestens zwei im Abstand voneinander angeordnete, als Rundrohre ausgebildete Ausleger (14) im wesentlichen senkrecht über. Weiter ist mindestens ein im wesentlichen U-förmiger Bügel (18) vorgesehen, der einen teleskopierbaren Bügelsteg (20) und zwei an den Stegenden angelenkte mit je einem der Ausleger teleskopartig verbindbare, als Rundrohre ausgebildete Bügelschenkel (22) aufweist. Um mit besonders einfachen Mitteln eine individuelle Unterteilung des Kofferraums in verschiedene Gebrauchsräume zu ermöglichen, sind die Ausleger (14) an je einem längs der Rahmenschenkel (10) verschiebbaren und an diesen festklemmbaren Klemmschlitten (16) angeordnet.

## Beschreibung

Die Erfindung betrifft eine Vorrichtung zum Unterteilen eines Kraftfahrzeug-Kofferraums mit einem auf dem Kofferraumboden auflegbaren Fußrahmen, dessen vorzugsweise im Querschnitt rechteckige Rahmenschenkel als Teleskoprohre ausgebildet sind, mit mindestens zwei im Abstand voneinander im wesentlichen senkrecht über den Fußrahmen überstehenden, vorzugsweise als nach oben offene Rundrohre ausgebildeten Auslegern, und mit mindestens einem im wesentlichen U-förmigen Bügel, der einen teleskopierbaren Bügelsteg und zwei an den Stegenden angeordnete, mit je einem der Ausleger teleskopartig verbindbare, vorzugsweise als Rundrohre ausgebildete Bügelschenkel aufweist.

Ungesichert im Kofferraum eines Kraftfahrzeugs transportierte Gegenstände neigen dazu, bei der Kurvenfahrt oder beim Anfahren und Bremsen umzukippen oder im Kofferraum hin- und herzurutschen. Abgesehen von den dabei auftretenden störenden Geräuschen können die Gegenstände selbst oder ihr Inhalt beschädigt werden. Um dies zu vermeiden, ist bereits eine Vorrichtung zur Lage- und Kippsicherung von Gepäckstücken und dergleichen Gegenständen für den Einsatz in Kraftfahrzeug-Kofferräumen der eingangs angegebenen Art bekannt (DE 39 00 112 A1), deren senkrechte Ausleger an den Ecken des Fußrahmens starr angeordnet sind, und bei der zwei Teleskopbügel vorgesehen sind, die zwei einander benachbarte Ausleger überbrücken und mit dem zugehörigen Rahmenschenkel eine äußere senkrechte Begrenzungsebene aufspannen. Die Bügelstege werden zusätzlich durch mindestens ein als Teleskopstange ausgebildetes Halteorgan miteinander verbunden, wobei die Halteorgane mit ihren Enden längs der Bügelstege verschiebbar und mittels Spannvorrichtungen lösbar an diesen festklemmbar sind. Die das Halteorgan bildende Teleskopstange ist dabei immer senkrecht zu den Bügelstegen ausgerichtet und nur parallel an diesen verschiebbar. Weiter sind die Teleskopteile des Fußrahmens nur stufenweise in verschiedenen, in gleichen Abständen voneinander angeordneten Positionen miteinander verbindbar oder verrastbar. Die Handhabung der bekannten Vorrichtung hat sich vor allem wegen der starr am Rahmen angeordneten Teleskopausleger für die teleskopierbaren Bügel und wegen der stufenweisen Fußrahmenverstellung als relativ umständlich erwiesen. Weiter waren der Anpassung an unterschiedliche Kofferraumabmessungen hierdurch Grenzen gesetzt.

Der Erfindung liegt daher die Aufgabe zugrunde, den bekannten Kofferraumeinsatz der eingangs angegebenen Art dahingehend zu verbessern, daß bei möglichst einfacher Bauweise eine flexible Anpassung an unterschiedliche Kofferraumgrößen und verschieden gestaltete Transportgüter möglich ist.

Zur Lösung dieser Aufgabe wird gemäß der Erfindung vorgeschlagen, daß die Ausleger an einem längs der Rahmenschenkel verschiebbaren und an diesen festklemmbaren Klemmschlitten angeordnet sind. Mit dieser Maßnahme kommt den teleskopierbaren Bügeln selbst eine variable Unterteilungsfunktion zu. Da die die Ausleger tragenden Klemmschlitten unabhängig voneinander längs der Rahmenschenkel verschiebbar und an diesen festklemmbar sind, können die Bügel unter Anpassung an die Gestalt des Transportguts auch schräg zu den Rahmenschenkeln ausgerichtet werden. Die zu einem Bügel gehörenden Klemmschlitten können entweder auf einander gegenüberliegenden Rahmenschenkeln oder auf einander benachbarten Rahmenschenkeln geführt werden. Da die Bügel an den Auslegern zusätzlich höhenverstellbar sind, können die Bügel auch über Kreuz am Fußrahmen angeordnet werden. Dadurch können unter Einschluß der Kofferraumwände vier gegeneinander abgegrenzte Gebrauchsräume unterschiedlicher Gestalt eingestellt werden.

Gemäß einer bevorzugten Ausgestaltung der Erfindung weisen die als Vierkantrohre ausgebildeten Rahmenschenkel in ihrer oberen Rohrwand eine längsverlaufende Schlitzöffnung auf, während die Klemmschlitten einen im Inneren der Rahmenschenkel verschiebbar angeordneten Gleitschuh und einen auf der oberen Rohrwand verschiebbaren, den Ausleger tragenden, mittels eines durch die Schlitzöffnung der Rohrwand hindurchgreifenden Spannbolzens unter Zwischenklemmen eines oder beider Teleskoprohre des Rahmenschenkels mit dem Gleitschuh lösbar verbindbaren Klemmschuh aufweisen können. Der Gleitschuh kann dabei als dem Innenprofil der Rahmenschenkel angepaßtes U-Stück ausgebildet sein, dessen freie Schenkel nach unten weisen und in dessen Steg ein Muttergewinde zur Aufnahme des mit einem entsprechenden Außengewinde versehenen Spannbolzens angeordnet ist. Andererseits weist der Klemmschuh zweckmäßig ein die obere Rohrwand des Rahmenschenkels in Querrichtung formschlüssig übergreifendes U-Profil auf. Der vorzugsweise als Flügelschraube ausgebildete Spannbolzen greift vorteilhafterweise durch eine im Abstand vom Ausleger im Klemmschuh angeordnete Durchsteckbohrung hindurch.

Eine weitere vorteilhafte Ausgestaltung der Erfindung sieht vor, daß die Rahmenschenkel aus quer zu ihrer Längserstreckung unter Freilassung der Schlitzöffnung gebogenen Metallblechen bestehen. Auch der Gleitschuh und/oder der Klemmschuh können als Biegeteile aus Metallblech ausgebildet sein.

Gemäß einer weiteren vorteilhaften Ausgestaltung der Erfindung sind die Bügelschenkel am Bügelsteg um eine Querachse verschwenkbar angelenkt, wobei die mittels eines Gelenkbolzens miteinander verbundenen Gelenkteile der Bügelschenkel und des Bügelstegs aus gummielastischem Material bestehen können. Wenn zusätzlich die Ausleger und die freien Bügelschenkel mittels einer Stellschraube lösbar miteinander verbindbar sind, können die Bügelstege auch schräg zur Fußrahmenebene ausgerichtet werden. Wenn vorteilhafterweise die Teleskopteile des Stegs mittels einer Stellschraube lösbar miteinander verbunden sind, ist eine gegenseitige Verspannung oder Verrastung der teleskopierbaren Rahmenschenkelteile entbehrlich.

Der Fußrahmen ist vorteilhafterweise aus vier an ihren Schenkeln paarweise miteinander teleskopierbaren Winkelstücken zusammengesetzt, wobei die Winkelstücke jeweils aus zwei paarweise miteinander starr verbundenen Teleskopaußenrohren oder Teleskopinnenrohren bestehen.

Zur Verbesserung der Lagestabilität des Kofferraumeinsatzes innerhalb des Kofferraums können an der Unterseite der Rahmenschenkel, vorzugsweise im Bereich der Rahmenecken, Flächenreißverschlußhälften angeordnet werden, die mit am Kofferraumboden angeordneten komplementären Flächenreißverschlußhälften oder einem textilen Bodenbelag lösbar verbindbar sind.

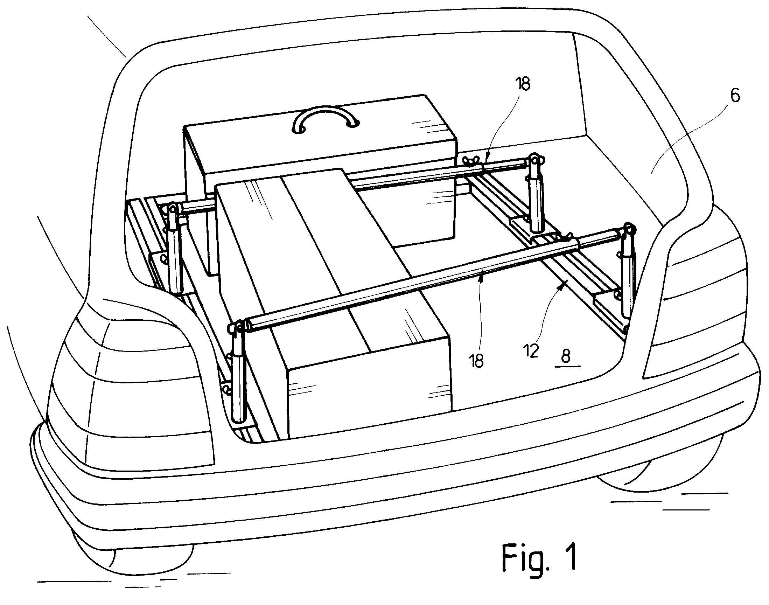

Im folgenden wird die Erfindung anhand eines in der Zeichnung in schematischer Weise dargestellen Ausführungsbeispiels näher erläutert. Es zeigen
- Fig. 1: einen in den Kofferraum eines Kraftfahrzeugs eingesetzten Kofferraumeinsatz in schaubildlicher Darstellung;

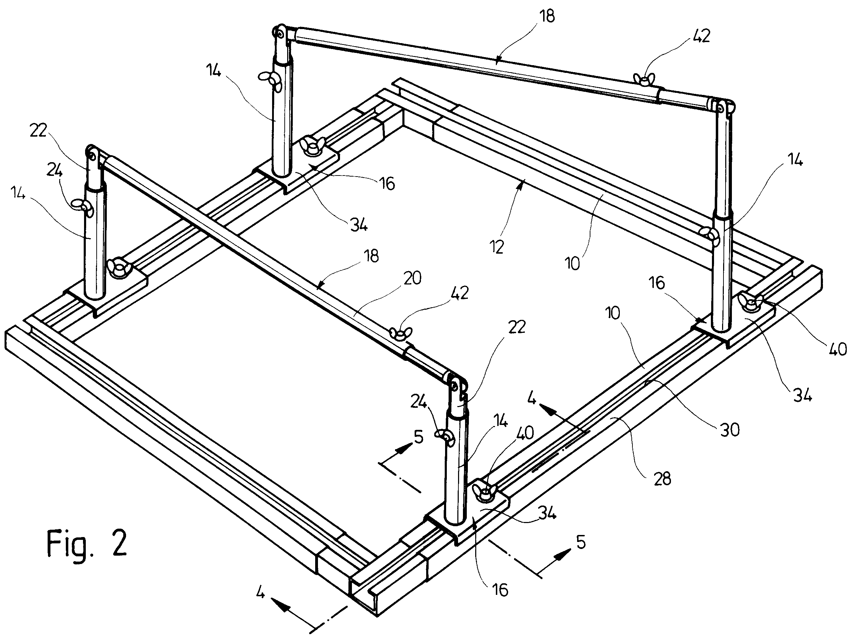

- Fig. 2: den Kofferraumeinsatz nach Fig. 1 mit zwei schräg zueinander ausgerichteten Bügeln;
- Fig. 3: den Kofferraumeinsatz nach Fig. 1 mit einander überkreuzenden Bügeln;

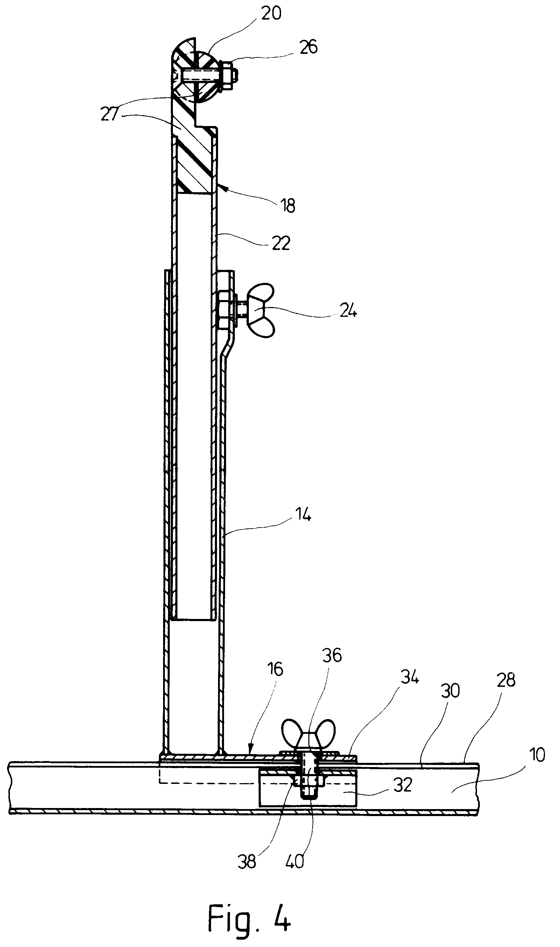

- Fig. 4: einen Schnitt entlang der Schnittlinie 4-4 der Fig. 2 und

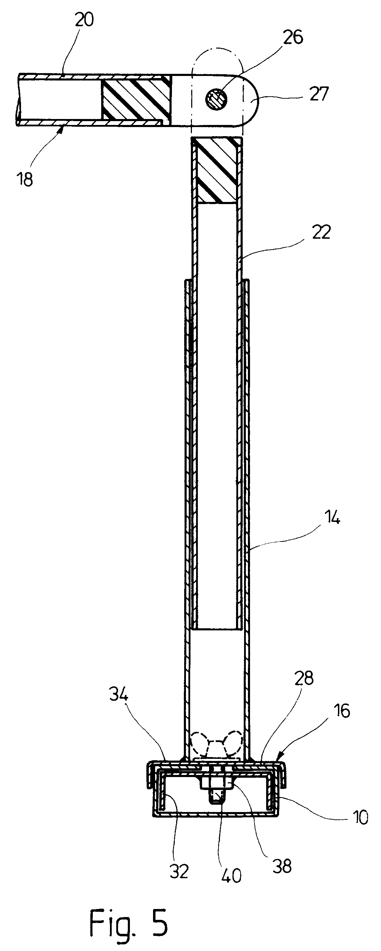

- Fig. 5: einen Schnitt entlang der Schnittlinie 5-5 der Fig. 2.

Die in der Zeichnung dargestellte Vorrichtung ist für den Einsatz in den Kofferraum 6 eines Kraftfahrzeugs bestimmt. Sie besteht im wesentlichen aus einem aus teleskopierbaren Rahmenschenkeln 10 zusammengesetzten, auf dem Kofferraumboden 8 auflegbarem Fußrahmen 12, vier entlang den Rahmenschenkeln 10 verschiebbar und an diesen festklemmbar angeordneten, je einen vertikalen Ausleger 14 tragenden Klemmschlitten 16 und zwei die Klemmschlitten paarweise miteinander verbindenen, im wesentlichen U-förmigen Bügeln 18. Die Bügel 18 weisen einen teleskopierbaren Bügelsteg 20 und zwei an den Enden des Bügelstegs 20 angelenkte, teleskopartig mit je einem der Ausleger 14 verbindbare Bügelschenkel 22 auf. Die an den Klemmschlitten 16 starr angeordneten Ausleger 14 sind ebenso wie die Bügelschenkel 22 als Rundrohre ausgebildet, so daß ein gegenseitiges Verdrehen um die Rohrachse möglich ist. Die Bügelschenkel 22 können an den zugehörigen Auslegern 14 mittels Stellschrauben 24 in beliebiger Höhe festgelegt werden. Die zwischen Bügelschenkel 22 und Bügelsteg 20 vorhandenen Gelenke 26 lassen auch eine Schrägstellung des Bügelstegs 20 gegenüber der Fußrahmenebene zu. Der Bügelsteg 20 und die Bügelschenkel 22 weisen an ihren durch die Gelenke 26 miteinander verbundenen Enden aus Gummi bestehende Lagereinsätze 27 auf.

Die Rahmenschenkel sind im wesentlichen als Vierkantrohre ausgebildet, die an ihrer oberen Rohrwand 28 eine längsverlaufende Schlitzöffnung 30 aufweisen.

Die Klemmschlitten 16 sind aus einem im Inneren der Rahmenschenkel 10 verschiebbar angeordneten, im Querschnitt U-förmig profilierten Gleitschuh 32 und einem die obere Rohrwand 28 quer übergreifenden, den Ausleger 14 tragenden Klemmschuh 34 zusammengesetzt, die unter Zwischenklemmen eines oder beider Teleskoprohre des Rahmenschenkels 10 mittels einer durch eine Bohrung 36 des Klemmschuhs und die Schlitzöffnung 30 der Rahmenschenkel hindurch in ein Muttergewinde 38 des Gleitschuhs 32 eingreifenden Spannbolzens 40 lösbar miteinander verbindbar sind. Damit können die Klemmschlitten 16 unabhängig voneinander nach Lösen des Spannbolzens 40 entlang dem zugehörigen Rahmenschenkel 10 in die gewünschte Position verschoben und anschließend dort festgeklemmt werden.

Die inneren und äußeren Teleskoprohre der Rahmenschenkel 10 sind im Bereich der Rahmenecken paarweise starr miteinander verbunden, vorzugsweise miteinander verschraubt. Dadurch erhält man insgesamt vier Winkelstücke von über Eck miteinander verbundenen Schenkelteilen, die zur Herstellung des Fußrahmens 12 paarweise ineinander gesteckt werden. Da die Bügelstege 20 in dem sich beim Verschieben der Klemmschlitten 16 selbsttätig einstellenden Abstand mittels Stellschrauben 42 miteinander verbindbar sind und da auch der eine oder andere Klemmschlitten 16 beim Anziehen des Spannbolzens 40 eine kraftschlüssige Verbindung zwischen den Teleskoprohren des Rahmenschenkels 10 herstellt, ist eine zusätzliche Verspannung zwischen den Teleskoprohren der Rahmenschenkel entbehrlich.

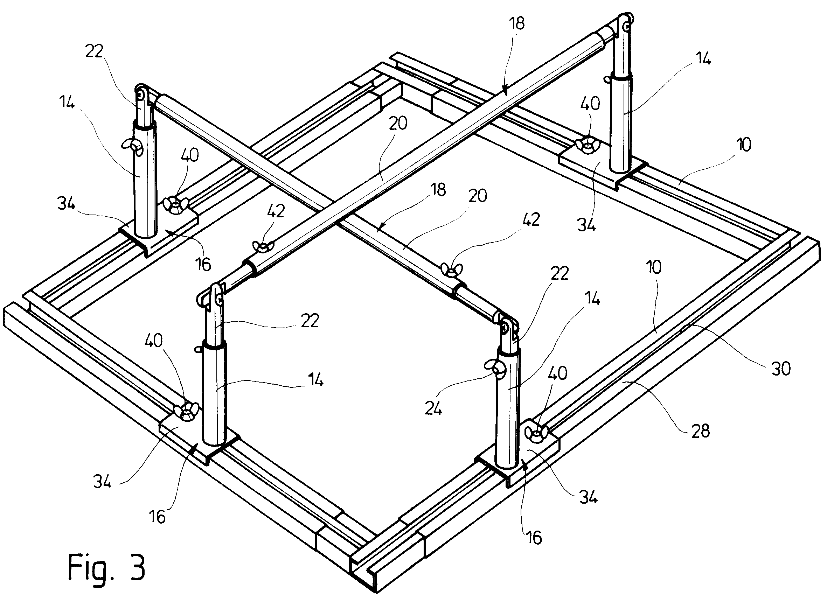

Wie aus Fig. 3 zu ersehen ist, können die Bügel 18 auch über Kreuz angeordnet werden, so daß der Kofferraum bei zwei Bügeln 18 in vier individuell gestaltete Gebrauchsräume unterteilt werden kann.

Zusammenfassend ist folgendes festzustellen: Die Erfindung bezieht sich auf einen Einsatz für einen Kraftfahrzeug-Kofferraum, der diesen in verschiedene Gebrauchsräume unterteilt. Der Einsatz weist einen auf dem Kofferraumboden 8 auflegbaren Fußrahmen 12 auf, dessen Rahmenschenkel 10 als Teleskoprohre ausgebildet sind. An dem Fußrahmen stehen mindestens zwei im Abstand voneinander angeordnete, als Rundrohre ausgebildete Ausleger 14 im wesentlichen senkrecht über. Weiter ist mindestens ein im wesentlichen U-förmiger Bügel 18 vorgesehen, der einen teleskopierbaren Bügelsteg 20 und zwei an den Stegenden angelenkte mit je einem der Ausleger 14 teleskopartig verbindbare, als Rundrohre ausgebildete Bügelschenkel 22 aufweist. Um mit besonders einfachen Mitteln eine individuelle Unterteilung des Kofferraums in verschiedene Gebrauchsräume zu ermöglichen, sind die Ausleger 14 an je einem längs der Rahmenschenkel 10 verschiebbaren und an diesen festklemmbaren Klemmschlitten 16 angeordnet.

## Patentansprüche

1. Vorrichtung zum Unterteilen eines Kraftfahrzeug-Kofferraums (6), mit einem auf den Kofferraumboden (8) auflegbaren Fußrahmen, dessen vorzugsweise im Querschnitt rechteckige Rahmenschenkel (10) als Teleskoprohre ausgebildet sind, mit mindestens zwei im Abstand voneinander im wesentlichen senkrecht über den Fußrahmen (12) überstehenden, vorzugsweise als Rundrohre ausgebildeten Auslegern (14), und mit mindestens einem im wesentlichen U-förmigen Bügel (18), der einen teleskopierbaren Bügelsteg (20) und zwei an den Stegenden angeordnete, mit je einem der Ausleger (14) teleskopartig verbindbare, vorzugsweise als Rundrohre ausgebildete Bügelschenkel (22) aufweist, **dadurch gekennzeichnet**, daß die Ausleger (14) an einem längs der Rahmenschenkel (10) verschiebbaren und an diesem festklemmbaren Klemmschlitten (16) angeordnet sind.

2. Vorrichtung nach Anspruch 1, **dadurch gekennzeichnet**, daß die als Vierkantrohre ausgebildeten Rahmenschenkel (10) in ihrer oberen Rohrwand (28) eine längsverlaufende Schlitzöffnung (30) aufweisen.

3. Vorrichtung nach Anspruch 2, **dadurch gekennzeichnet**, daß die Klemmschlitten (16) einen im Inneren der Rahmenschenkel (10) verschiebbar angeordneten Gleitschuh (32) und einen auf der oberen Rohrwand (38) verschiebbaren, den Ausleger (14) tragenden, mittels eines durch die Schlitzöffnung (30) der Rohrwand (28) hindurchgreifenden Spannbolzens (40) unter Zwischenklemmen eines oder beider Teleskoprohre des Rahmenschenkels (10) mit dem Gleitschuh (32) lösbar verbindbaren Klemmschuh (34) aufweisen.

4. Vorrichtung nach Anspruch 3, **dadurch gekennzeichnet**, daß der Gleitschuh (32) als dem Innenprofil der Rahmenschenkel (10) angepaßtes U-Stück ausgebildet ist, dessen freie Schenkel nach unten weisen und in dessen Steg ein Muttergewinde (38) zur Aufnahme des mit einem Außengewinde versehenen Spannbolzens (40) angeordnet ist.

5. Vorrichtung nach Anspruch 3 oder 4, **dadurch gekennzeichnet**, daß der Klemmschuh (34) ein die obere Rohrwand (38) des Rahmenschenkels (10) in Querrichtung formschlüssig übergreifendes U-Profil aufweist.

6. Vorrichtung nach Anspruch 4 oder 5, **dadurch gekennzeichnet**, daß der vorzugsweise als Flügelschraube ausgebildete Spannbolzen (40) durch eine im Abstand vom Ausleger (14) im Klemmschuh (34) angeordnete Bohrung (36) hindurchgreift.

7. Vorrichtung nach einem der Ansprüche 1 bis 6, **dadurch gekennzeichnet**, daß die Rahmenschenkel (10) aus quer zu ihrer Längserstreckung unter Freilassung der Schlitzöffnung (30) gebogenen Metallblechen bestehen.

8. Vorrichtung nach einem der Ansprüche 3 bis 7, **dadurch gekennzeichnet**, daß der Gleitschuh (32) und/oder der Klemmschuh (34) aus gebogenem Metallblech bestehen.

9. Vorrichtung nach einem der Ansprüche 1 bis 8, **dadurch gekennzeichnet**, daß die Bügelschenkel (22) am Bügelsteg (20) um eine Querachse (26) verschwenkbar angelenkt sind.

10. Vorrichtung nach Anspruch 9, **dadurch gekennzeichnet**, daß die mittels eines Gelenkbolzens (26) miteinander verbundenen Lagerteile (27) der Bügelschenkel (22) und des Bügelstegs (20) aus gummielastischem Material bestehen.

11. Vorrichtung nach einem der Ansprüche 1 bis 10, **dadurch gekennzeichnet**, daß die Teleskopteile des Bügelstegs (20) mittels einer Stellschraube (42) lösbar miteinander verbindbar sind.

12. Vorrichtung nach einem der Ansprüche 1 bis 11, **dadurch gekennzeichnet**, daß die Ausleger (14) und die Bügelschenkel (22) mittels einer Stellschraube (24) lösbar miteinander verbindbar sind.

13. Vorrichtung nach einem der Ansprüche 1 bis 12, **dadurch gekennzeichnet**, daß der Fußrahmen (12) aus vier an ihren die Teleskopteile (10) der Rahmenschenkel bildenden Schenkeln paarweise miteinander teleskopierbaren Winkelstücken zusammengesetzt ist.

14. Vorrichtung nach Anspruch 13, **dadurch gekennzeichnet**, daß die Winkelstücke jeweils aus zwei paarweise miteinander starr verbundenen Teleskopaußenrohren oder Teleskopinnenrohren der Rahmenschenkel (10) bestehen.

15. Vorrichtung nach einem der Ansprüche 1 bis 14, **dadurch gekennzeichnet**, daß die über ihre Ausleger (14) durch den Bügel (18) miteinander verbundenen Klemmschlitten (16) auf einander gegenüberliegenden Rahmenschenkeln (10) des Fußrahmens (12) verschiebbar angeordnet sind.

16. Vorrichtung nach einem der Ansprüche 1 bis 14, **dadurch gekennzeichnet**, daß die über ihre Ausleger (14) durch den Bügel (18) miteinander verbundenen Klemmschlitten (16) auf einander benachbarten Rahmenschenkeln (10) des Fußrahmens (12) verschiebbar angeordnet sind.

17. Vorrichtung nach einem der Ansprüche 1 bis 16, **dadurch gekennzeichnet**, daß an der Unterseite der Rahmenschenkel (10), vorzugsweise im Bereich der Rahmenecken, Flächenreißverschlußhälften angeordnet sind, die mit am Kofferraumboden (8) angeordneten komplementären Flächenreißverschlußhälften oder einem textilen Bodenbelag lösbar verbindbar sind.
